# EUROPEAN PATENT SPECIFICATION

(11) **EP 1 488 648 B1**
(45) Date of publication and mention of the grant of the patent: **14.12.2005**
(21) Application number: 03720660.4
(22) Date of filing: 17.03.2003
(51) Int. Cl.: H04Q 7/22

(54) **TELECOMMUNICATIONS SERVICES APPARATUS**
VORRICHTUNG FÜR TELEKOMMUNIKATIONSDIENSTE
APPAREIL DE SERVICES DE TELECOMMUNICATIONS

(30) Priority: 25.03.2002 GB 0206985; 12.10.2002 GB 0223791
(43) Date of publication of application: 22.12.2004
(73) Proprietor: INTELLPROP LIMITED, Guernsey, Channel Islands (GB)
(72) Inventor: WILSON, Jeffrey, Hampshire PO16 7UH (GB)
(74) Representative: Robinson, Simon John
(86) International application number: PCT/GB2003/001158
(87) International publication number: WO 2003/081924

(56) References cited:
- WO-A-01/47297
- WO-A-99/49680
- US-A- 6 108 530

## Description

### Field of Invention

This invention relates to Telecommunications Services Apparatus, and particularly concerns telecommunication networks and the text messaging services of mobile telephone networks. The invention particularly concerns text messaging to SMS Hosts, bulk text messaging, premium rate text messaging and value added services for text.

### Background of the Invention:

In GSM the Short Message Services (SMS) allow Mobile Stations (MS) to send short text messages. The messages are normally routed via a Short Message Service Centre (SMSC) that provides a store and forward function. The SMSC attempts to deliver the message to its destination which may be another MS or a host address in the same or another network. In GSM, the prevalent use of an SMSC in the delivery of each Short Message follows the original intention of the GSM specifications, which assumed that initially radio coverage would be patchy, battery life would be poor, and for these and other reasons phones would be frequently unreachable. With the maturity of the technologies, over 80% of text messages are now deliverable on the first attempt in some networks, and the overhead and extra delay incurred by transiting an SMSC is becoming undesirable for many types of service that use SMS.

Text messaging has undergone enormous growth because it fulfils a basic communication need, complementing voice communication with the ability to send and receive short text messages.

The term 'Text messaging' is taken herein as a generic term that includes similar forms of messaging including SMS, EMS, MMS and the like.

Text messaging in GSM, using SMS, was primarily aimed at handset-to-handset communication, or network to handset communication for the purpose of alerting. The extensive use today for communication gives rise to a need for associated services that allow text messages to be exchanged with machines. This has given rise to SMS Hosts.

By the terms 'SMS Hosts' herein we mean are equipments or Applications attached to networks and which can source and terminate SMS.

SMS Hosts are used for a wide variety of purposes including voting, competitions and Interactive TV. By their association with mass media and their appeal to the general public, some SMS applications can generate very high volumes of SMS traffic between users and SMS Hosts. In many cases this has led to overloading of existing SMSC-based infrastructure and a reduction in quality of service for all users. In many cases overload has resulted in large numbers of messages being discarded by some networks even though they may have already been charged for.

One high growth area for SMS is premium rate services, which in conjunction with SMS Host-based applications are increasingly showing potential to generate significant revenue for operators. Typical examples of premium rate services that attract high levels of traffic are television-stimulated voting and sports results during national and international events. In many ways the growth of this premium rate market for SMS has parallels with the premium rate voice market which grew and then faded in the late 1980s and early 1990s. In many countries, premium rate voice services were closed down either due to regulator intervention or media pressure, the bad publicity being generated by unscrupulous and fraudulent usage of premium charges by some third-party service providers that were not directly associated with the network operators.

Premium rate SMS is in danger of suffering many of the same problems as premium rate voice due to the proliferation of a billing technique known as Reverse Billing.

There are essentially three ways to bill for a text-based value added service:
1. A network or third-party SMS Host can charge an up-front subscription for one or more text messages to be delivered to a mobile telephone number from an SMS Host application.
2. A network can charge a premium upon receipt by the network of a mobile originated (MO) message from a mobile telephone number that is addressed to a network or third-party SMS Host application.
3. On receipt of a message from a mobile telephone, a network or third-party SMS Host application can reply with a mobile terminated (MT) message, and the network may be instructed by the SMS Host to charge the mobile telephone account a premium for that reply. This is known as Reverse Billing.

The latter solution is prevalent in mobile networks, but is open to abuse and fraud. There have already been many cases of fraudulent use of reverse billing reported in the press. Because it is the reply that is charged at a premium, users may easily be duped into responding to an innocent looking text message or advertisement thereby triggering a reply charged at a premium rate, to later find that they have been charged a hefty fee. The problem with reverse billing is that it is the service provider rather than the network operator who is responsible for initiating the charge, and so there is a built-in incentive for fraud. If this situation is allowed to continue, then users will become distrustful of SMS; premium rate SMS will then go the same way as premium rate voice, and the networks will lose out on a valuable source of revenue.

In contrast, premium rate billing of MO messages is, we believe, the correct way to operate value added services. With this technique the user is charged for originating a message, and is not charged for any reply. The charging can then be made transparent. Ideally the numbering plan for premium rate SMS and short codes would indicate the charge bands as is done on many fixed networks for premium rate voice.

US 6108530 discloses a mobile communications network in which it is determined whether the network has the necessary capacity to deliver an SMS message. If the capacity is insufficient then the message is divided into fragments and then sent as two separate fragments. There is no disclosure of determining a delivery route for SMS messages recognised as being those for an SMS host which is capable of dealing with mass-messaging events.

WO 99/49680 discloses apparatus for remotely maintaining and controlling various devices deployed in homes and businesses, for example utility meters and security devices. There is no disclosure of determining whether an SMS message is for a mass-messaging capable SMS host or of appropriate selection of two delivery paths, one of which avoids a Short Message Service Centre (SMSC). This document in fact discloses that all SMS messages pass to their destinations via an SMSC.

WO 01/47297 discloses apparatus for routing messages in a telecommunications network. However, all SMS messages are sent via an SMSC.

### Summary of the Invention

According to one aspect of the invention we provide a telecommunications services apparatus capable of processing text messages some of which are addressed to an SMS Host, as hereinbefore defined, capable of terminating volumes of text messages resulting from mass-messaging events, the apparatus being provided with one or more SMS routers which is/are configured to receive all incoming mobile originated text messages, characterised in that the apparatus is configured to (i) transmit certain incoming text messages from the one or more SMS routers to the SMS Host and (ii) to transmit other incoming text messages from the one or more SMS routers to destinations other than the SMS Host, the apparatus being such that the SMS router/s is/are configured to recognise incoming text messages to one or more specified SMS Hosts and to be configured to direct text messages addressed to the SMS Host to the SMS Host by way of a first path (i), without passing via the store and forward function of an SMSC, and the first path having a higher band width compared with the band width of the alternative path.

The alternative path may be provided with a short message service centre (SMSC) for delivery.

According to a second aspect of the invention we provide a method of managing text messages in a telecommunications services apparatus comprising receiving all incoming mobile originated text messages, determining from the attributes of a text message whether or not the text message is of a specified character appropriate to be received by an SMS Host, as hereinbefore defined, which SMS host is capable of terminating volumes of text messages resulting from mass messaging events, and if the message is determined to be of that character, directing the text message by a first path to the SMS Host without passing via the store and forward function of an SMSC, but otherwise directing the message to a destination by way of an alternative path, and the first path having a higher band width compared with the band width of the alternative path.

The present invention works by a technique that is likely to become known as 'grooming'. Prior to arrival at the SMSC, short messages are groomed by an SMS Router. The network is arranged so that all mobile originated (MO) short messages pass through an SMS Router prior to arriving at an SMSC in the network.

SMSCs that comply with the GSM specifications are required to limit the delivery of messages to any given number to around one message per second, which is much too slow for mass-messaging events, where several thousand messages per second may be sent. Consequently, when SMSCs are used for mass messaging applications, queues build up in the SMSCs very quickly, ultimately resulting in long delays and discarded messages.

The SMS grooming approach of the invention avoids this problem by extracting those message that are destined for SMS Host applications and passing those messages unimpeded directly to the SMS Hosts.

In this way enormous message bandwidth can potentially be achieved, and the message delivery path need no longer be a bottleneck that restricts the growth of new services, hence providing the capability for true premium rate messaging.

A billing record generation means is preferably so arranged as to be capable of applying a premium charging rate to text messages received by an SMS Host.

A known technique, usually called Virtual mobile, may be applied in conjunction with the present invention. This allows mobile originated messages from any network to be delivered to an SMS Host on a network that supports Virtual Mobile. Without this technique, an SMS Host would need a separate interconnect to the SMSCs of every network from which it desires to receive SMS traffic.

According to a third aspect of the invention we provide a machine readable storage medium encoded with instructions operative when loaded into an SMS router to cause the SMS router, in use, to recognise incoming mobile originated text messages to one or more SMS Hosts as hereinbefore defined, which SMS host(s) is/are capable of terminating volumes of text messages resulting from mass-messaging events, and to direct said text messages to the SMS Host by way of a designated path, without passing via the store and forward function of an SMSC but otherwise directing the message to a destination by way of an alternative path, and the designated path having a higher band width compared with the band width of the alternative path.

The invention will now be further described, by way of example only, with reference to the drawing.

### Brief Description of the Drawing

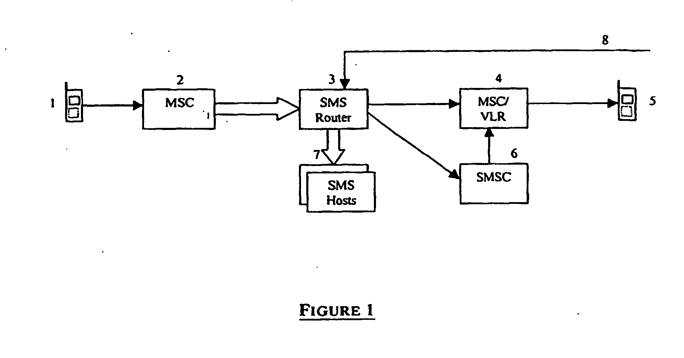

**Figure 1** is a schematic of a telecommunications services apparatus in accordance with the invention.

### Description of Preferred Embodiments

With reference to Figure 1, a mobile originated (MO) text message is sent from sender [1] via MSC [2]. The network is configured so that all MO traffic passes through an SMS Router [3]. The SMS Router is operable to attempt direct delivery of person-to-person traffic to the MSC/VLR [4] on which the destination mobile station [5] is currently registered. The SMS Router is also operable to direct undelivered person-to-person traffic via the SMSC [6] for store and forward. The SMS Router is further operable to groom traffic that is destined for SMS Hosts in the network and to transmit them directly to the SMS Hosts [7]. The bandwidth of the signalling route [2]-[3]-[7] is potentially large, and is much larger than the bandwidth capability of the SMSC route. The SMS Router is also capable of accepting traffic from other networks [8] using a Virtual Mobile technique.

We consider that reverse billing is the wrong model for sustained SMS growth in premium rate services due to its incentive to abuse by service providers and the potential to make subscribers increasingly mistrustful of SMS charges. We consider that the only satisfactory billing method is MO billing, with a defined premium where appropriate. For high volume messaging applications this cannot be sustained via SMSCs, since SMSCs are designed for store and forward, and generally have limited throughput. This causes delays at best, and loses messages at worst.

In a preferred embodiment the premium for a text message would be deducible (within limits) from the destination number, as for voice premium rate. The numbering plan would also identify the destination as an SMS Host application.

The grooming operation is performed by the SMS Router, which may be implemented as one or a cluster of units, and which may be geographically dispersed. The SMS Router examines each arriving MO message (or MT message from other networks by Virtual Mobile) and decides on the basis of addressing information and/or content that the message is destined for a particular SMS Host. The SMS Host may be associated with this network, or may associated with a competing network but be reachable over an interconnect. These messages are groomed off from the normal traffic and transmitted directly towards the SMS Hosts. The interface to the SMS Hosts may be MAP over SS7, SMPP over TCP/IP or other transport means.

This model supports free-text, premium text, voting and other high volume applications, allowing the network to generate revenue by responding quickly to market demands.

With such a grooming solution, network operators retain control of premium charging, whereas with reverse billing the responsibility for fair and reasonable usage falls to the service providers. Maximum benefit from grooming is obtained when all networks in a national or geographic area groom, and there is no throughput restriction. SMS Hosts may have a connection to each operator in a geographic area, or alternatively the operators in that area may support interconnects so that an SMS Host may be reached directly from other local networks.

| **Glossary** | |
|---|---|
| EMS | Enhanced Messaging Service |
| MAP | Mobile Application Protocol |
| MMS | Multimedia Messaging Service |
| MO | Mobile Originated |
| MSC | Mobile Switching Centre |
| MT | Mobile Terminated |
| SMPP | Short Message Peer to Peer protocol |
| SMS | Short Message Service of the GSM mobile telephone system |
| SMS Host | Equipment for sourcing and sinking Short Messages for specific applications |
| SMS Router | Equipment which embodies the invention and filters and responds to certain text messages. |
| SMSC | Short Message Service Centre |
| SS7 | CCITT Signalling System no 7 |
| TCP/IP | Transmission Control Protocol/Internet Protocol. A well known internet data protocol. |
| VLR | Visitor Location Register |

## Claims

1. A telecommunications services apparatus capable of processing text messages some of which are addressed to an SMS Host (7), capable of terminating volumes of text messages resulting from mass-messaging events, the apparatus being provided with one or more SMS routers (3) which is/are configured to receive all incoming mobile originated text messages, **characterised in that** the apparatus is configured to (i) transmit certain incoming text messages from the one or more SMS routers to the SMS Host and (ii) to transmit other incoming text messages from the one or more SMS routers to destinations other than the SMS Host, the apparatus being such that the SMS router/s is/are configured to recognise incoming text messages to one or more specified SMS Hosts and to be configured to direct text messages addressed to the SMS Host to the SMS Host by way of a first path (i), without passing via the store and forward function of an SMSC (6), and the first path having a higher band width compared with the band width of the alternative path.

2. A telecommunications services apparatus as claimed in claim 1 so arranged as to apply a premium charging rate to text messages directed to an SMS Host (7).

3. A telecommunications services apparatus as claimed in any one of the preceding claims in which there is a plurality of the SMS routers (3) and they are geographically dispersed.

4. A telecommunications services apparatus according to any one of the preceding claims in which the SMS router/s (3) is/are configured to direct the text messages to the first path (i) in dependence upon the destination number or content of a message.

5. A telecommunications services apparatus as claimed in any one of the preceding claims and which is so configured as to be capable of accepting text message traffic from other networks using a virtual mobile technique.

6. A method of managing text messages in a telecommunications services apparatus comprising receiving all incoming mobile originated text messages, determining from the attributes of a text message whether or not the text message is of a specified character appropriate to be received by an SMS Host (7), which SMS host is capable of terminating volumes of text messages resulting from mass messaging events, and if the message is determined to be of that character, directing the text message by a first path to the SMS Host without passing via the store and forward function of an SMSC (6), but otherwise directing the message to a destination by way of an alternative path, and the first path having a higher band width compared with the band width of the alternative path.

7. The method of claim 6 in which the alternative path has an associated SMSC (6) for use in the event that immediate delivery is not possible.

8. The method of either of claims 6 or 7 further comprising the step of generating a billing instruction which results in a premium rate charge being applied in the event that it was determined that the message was for delivery to an SMS Host (7) for which a premium rate has been set.

9. A machine readable storage medium encoded with instructions operative when loaded into an SMS router (3) to cause the SMS router, in use, to recognise incoming mobile originated text messages to one or more SMS Hosts (7), which SMS host(s) is/are capable of terminating volumes of text messages resulting from mass-messaging events, and to direct said text messages to the SMS Host (7) by way of a designated path, without passing via the store and forward function of an SMSC (6) but otherwise directing the message to a destination by way of an alternative path, and the designated path having a higher band width compared with the band width of the alternative path.

10. A machine readable storage medium as claimed in claim 9 in which the instructions are operative to cause a premium rate charging instruction to be generated when the call has been routed to an SMS Host.

## Patentansprüche

1. Vorrichtung für Telekommunikationsdienste, welche imstande ist, Textnachrichten zu verarbeiten, von denen einige an einen SMS-Host (7) adressiert sind, der zur Beendigung von Volumina von Textnachrichten fähig ist, die aus Massen-Nachrichtenübermittlungs-Ereignissen stammen, wobei die Vorrichtung mit einem oder mehreren SMS-Routem (3) versehen ist, der/die so konfiguriert ist/sind, dass er/sie alle hereinkommenden, von Mobiltelefonen stammenden Textnachrichten empfängt/empfangen, **dadurch gekennzeichnet, dass** die Vorrichtung dazu konfiguriert ist, (i) bestimmte hereinkommende Textnachrichten von dem einen oder den mehreren SMS-Routem an den SMS-Host zu übertragen und (ii) andere hereinkommende Textnachrichten von dem einen oder den mehreren SMS-Routem an andere Bestimmungsorte als dem SMS-Host zu übertragen, wobei die Vorrichtung so gestaltet ist, dass der/die SMS-Router dazu konfiguriert ist/sind, hereinkommende Textnachrichten an einen oder mehrere spezifizierte SMS-Hosts zu erkennen und so konfiguriert ist/sind, dass er/sie an den SMS-Host adressierte Textnachrichten mittels eines ersten Pfads (i) an den SMS-Host leitet/leiten, ohne über die Speicher- und Versandfunktion einer SMS-Zentrale (6) zu gehen, und wobei der erste Pfad eine im Vergleich zu der Bandbreite des alternativen Pfads höhere Bandbreite besitzt.

2. Vorrichtung für Telekommunikationsdienste nach Anspruch 1, die so eingerichtet ist, dass sie auf an einen SMS-Host (7) geleitete Textnachrichten einen Vorzugsabrechnungstarif erhebt.

3. Vorrichtung für Telekommunikationsdienste nach einem der vorhergehenden Ansprüche, in der mehrere SMS-Router (3) vorhanden und geographisch verteilt sind.

4. Vorrichtung für Telekommunikationsdienste nach einem der vorhergehenden Ansprüche, wobei der/die SMS-Router (3) so konfiguriert ist/sind, dass er/sie die Textnachrichten in Abhängigkeit von der Bestimmungsortzahl oder dem Inhalt einer Nachricht an den ersten Pfad (i) leitet/leiten.

5. Vorrichtung für Telekommunikationsdienste nach einem der vorhergehenden Ansprüche, welche so konfiguriert ist, dass sie Textnachrichtenverkehr aus anderen Netzwerken unter Verwendung einer Virtuellmobiltelefontechnik annehmen kann.

6. Verfahren zum Verwalten von Textnachrichten in einer Vorrichtung für Telekommunikationsdienste, welches umfasst: Empfangen aller hereinkommenden, von Mobiltelefonen stammenden Textnachrichten, Bestimmen aus den Attributen einer Textnachricht, ob die Textnachricht von einer festgelegten Beschaffenheit ist, die für den Empfang durch einen SMS-Host (7) geeignet ist, oder nicht, welcher SMS-Host fähig ist, Volumina von Textnachrichten, die aus Massen-Nachrichtenübermittlungs-Ereignissen stammen, zu beenden, und, wenn festgestellt wird, dass die Nachricht von jener Beschaffenheit ist, Leiten der Textnachricht durch einen ersten Pfad an den SMS-Host, ohne über die Speicher- und Versandfunktion einer SMS-Zentrale (6) zu gehen, ansonsten jedoch Leiten der Nachricht an einen Bestimmungsort mittels eines alternativen Pfads, und wobei der erste Pfad eine im Vergleich mit der Bandbreite des alternativen Pfads höhere Bandbreite besitzt.

7. Verfahren nach Anspruch 6, wobei der alternative Pfad eine ihm zugeordnete SMS-Zentrale (6) für den Einsatz in dem Fall aufweist, dass eine sofortige Zustellung nicht möglich ist.

8. Verfahren nach Anspruch 6 oder 7, das des Weiteren den Schritt der Erzeugung eines Gebührenerfassungsbefehls umfasst, der dazu führt, dass eine Vorzugstarifgebühr erhoben wird, falls festgestellt wird, dass die Nachricht zur Zustellung an einen SMS-Host (7) bestimmt ist, für den ein Vorzugstarif festgesetzt worden ist.

9. Maschinenlesbares Speichermedium, das mit Befehlen kodiert ist, welche tätig werden, wenn sie in einen SMS-Router (3) geladen werden, um zu bewirken, dass der SMS-Router im Betrieb hereinkommende, von Mobiltelefonen stammende Textnachrichten an einen oder mehrere SMS-Hosts (7) erkennt, welche(r) SMS-Host(s) fähig ist/sind, Volumina von Textnachrichten, die aus Massen-Nachrichten-übermittlungs-Ereignissen stammen, zu beenden, und dass er/sie die Textnachrichten an den SMS-Host (7) mittels eines bezeichneten Pfads leitet, ohne über die Speicher- und Versandfunktion einer SMS-Zentrale (6) zu gehen, ansonsten jedoch die Nachricht an einen Bestimmungsort mittels eines alternativen Pfads leitet, und wobei der bezeichnete Pfad eine im Vergleich mit der Bandbreite des alternativen Pfads höhere Bandbreite hat.

10. Maschinenlesbares Speichermedium nach Anspruch 9, wobei die Befehle tätig werden, um zu bewirken, dass ein Vorzugstarifabrechnungsbefehl erzeugt wird, wenn der Anruf an einen SMS-Host weitergeleitet worden ist.

## Revendications

1. Appareil de services de télécommunications capable de traiter des messages textuels dont certains sont adressés à un Hôte SMS (7), capable de faire aboutir des volumes de messages textuels résultant d'événements de messagerie de masse, l'appareil étant pourvu d'un ou plusieurs routeurs SMS (3) qui est/sont configuré(s) pour recevoir tous les messages textuels entrants en provenance d'un mobile, **caractérisé en ce que** l'appareil est configuré pour (i) transmettre certains messages textuels entrants du un ou plusieurs routeurs SMS à l'Hôte SMS et (ii) transmettre d'autres messages textuels entrants du un ou plusieurs routeurs SMS à des destinations autres que l'Hôte SMS, l'appareil étant tel que le(s) routeur(s) SMS est/sont configuré(s) pour reconnaître des messages textuels entrants vers un ou plusieurs Hôtes SMS spécifiés et configuré(s) pour diriger des messages textuels adressés à l'Hôte SMS vers l'Hôte SMS par la voie d'un premier trajet (i), sans passer via la fonction stockage et retransmission d'un SMSC (6), et le premier trajet ayant une bande passante supérieure en comparaison avec la bande passante du trajet alternatif.

2. Appareil de services de télécommunications selon la revendication 1, disposé de manière à appliquer un tarif de taxation majoré aux messages textuels dirigés vers un Hôte SMS (7).

3. Appareil de services de télécommunications selon l'une quelconque des revendications précédentes, dans lequel il y a une pluralité de routeurs SMS (3) et ils sont dispersés géographiquement.

4. Appareil de services de télécommunications selon l'une quelconque des revendications précédentes, dans lequel le(s) routeur(s) (3) est/sont configuré(s) pour diriger les messages textuels vers le premier trajet (i) en fonction du numéro de destination ou du contenu d'un message.

5. Appareil de services de télécommunications selon l'une quelconque des revendications précédentes et qui est configuré de manière à être capable d'accepter un trafic de messages textuels provenant d'autres réseaux en utilisant une technique de mobile virtuel.

6. Procédé de gestion de messages textuels dans un appareil de services de télécommunications comprenant la réception de tous les messages textuels entrants en provenance d'un mobile, la détermination à partir des attributs d'un message textuel si le message textuel est oui ou non d'un caractère spécifié approprié pour être reçu par un Hôte SMS (7), lequel hôte SMS est capable de faire aboutir des volumes de messages textuels résultant d'événements de messagerie de masse, et si le message est déterminé comme étant de ce caractère, diriger le message textuel par un premier trajet vers l'Hôte SMS sans passer via la fonction stockage et retransmission d'un SMSC (6), mais autrement diriger le message vers une destination par la voie d'un trajet alternatif, et le premier trajet ayant une bande passante supérieure en comparaison avec la bande passante du trajet alternatif.

7. Procédé selon la revendication 6, dans lequel le trajet alternatif a un SMSC associé (6) pour une utilisation dans le cas où la remise immédiate n'est pas possible.

8. Procédé selon l'une quelconque des revendications 6 ou 7, comprenant en outre l'étape consistant à générer une instruction de facturation qui entraîne le fait qu'une taxe majorée soit appliquée dans le cas où il a été déterminé que le message était destiné à une remise à un Hôte SMS (7) pour lequel un tarif majoré a été établi.

9. Support de stockage lisible par machine codé avec des instructions opérationnelles lorsque chargées dans un routeur SMS (3) pour faire que le routeur SMS, en utilisation, reconnaisse des messages textuels entrants en provenance d'un mobile vers un ou plusieurs Hôtes SMS (7), lequel(lesquels) hôte(s) SMS est/sont capable(s) de faire aboutir des volumes de messages textuels résultant d'événements de messagerie de masse, et dirige lesdits messages textuels vers l'Hôte SMS (7) par la voie d'un trajet désigné, sans passer via la fonction stockage et retransmission d'un SMSC (6) mais autrement diriger le message vers une destination par la voie d'un trajet alternatif, et le trajet désigné ayant une bande passante supérieure en comparaison avec la bande passante du trajet alternatif.

10. Support de stockage lisible par machine selon la revendication 9, dans lequel les instructions sont opérationnelles pour faire qu'une instruction de taxation de tarif majoré soit générée lorsque l'appel a été acheminé vers un Hôte SMS.
